# EUROPÄISCHE PATENTSCHRIFT

(11) **EP 2 132 543 B1**
(45) Veröffentlichungstag und Bekanntmachung des Hinweises auf die Patenterteilung: **26.12.2018**
(21) Anmeldenummer: 08734599.7
(22) Anmeldetag: 11.03.2008
(51) Int. Cl.: G01J 5/00, G01J 5/60, F23N 5/08

(54) **VERFAHREN ZUR KAMERAGESTÜTZEN ERFASSUNG DER STRAHLUNGSINTENSITÄT EINES GASFÖRMIGEN CHEMISCHEN REAKTIONSPRODUKTES SOWIE ANWENDUNGEN DES VERFAHRENS UND KORRESPONDIERENDE VORRICHTUNG**
METHOD FOR THE CAMERA-ASSISTED DETECTION OF THE RADIATION INTENSITY OF A GASEOUS CHEMICAL REACTION PRODUCT AND USES OF SAID METHOD AND CORRESPONDING DEVICE
PROCÉDÉ DE DÉTECTION, ASSISTÉ PAR CAMÉRA, DE L'INTENSITÉ DE RAYONNEMENT D'UN PRODUIT DE RÉACTION CHIMIQUE GAZEUX, APPLICATIONS DU PROCÉDÉ ET DISPOSITIF CORRESPONDANT

(30) Priorität: 13.03.2007 DE 102007012553
(43) Veröffentlichungstag der Anmeldung: 16.12.2009
(73) Patentinhaber: Merklein, Thomas, 91056 Erlangen (DE)
(72) Erfinder: Merklein, Thomas, 91056 Erlangen (DE)
(74) Vertreter: Schneider, Andreas
(86) Internationale Anmeldenummer: PCT/EP2008/001923
(87) Internationale Veröffentlichungsnummer: WO 2008/110341

(56) Entgegenhaltungen:
- EP-A- 0 469 258
- EP-A- 0 616 200
- EP-A- 1 091 175
- DE-A1- 19 710 206
- LOU CHUN ET AL: "On-line Detecting and Analysis of Flame Emissivity in Coal-fired Boilers", PROCEEDINGS OF THE CSEE 2006-04,, 1 April 2006 (2006-04-01), pages 6-9, XP009190364,

## Beschreibung

Die Erfindung betrifft ein Verfahren zur kameragestützten Erfassung der Strahlungsintensität eines gasförmigen chemischen Reaktionsproduktes, wobei aus der Differenz eines Bandenstrahlungswertes des Reaktionsproduktes und eines auf pyrometrischem Wege gebildeten Temperaturstrahlungswertes des Reaktionsproduktes eine Emissionsrate für die Strahlungsintensität des Reaktionsproduktes gebildet wird.

Weiterhin betrifft die Erfindung geeignete Anwendungen des Verfahrens.

Schließlich betrifft die Erfindung eine zum Verfahren korrespondierende Vorrichtung. Die Vorrichtung weist eine Verarbeitungseinheit mit Mitteln zur Bildung einer Emissionsrate für die Strahlungsintensität des Reaktionsproduktes aus der Differenz eines Bandenstrahlungswertes des Reaktionsproduktes und eines auf pyrometrischem Wege gebildeten Temperaturstrahlungswertes des Reaktionsproduktes auf.

Aus der deutschen Offenlegungsschrift DE 197 10 206 A1 ist ein Verfahren und eine Vorrichtung zur Verbrennungsanalyse sowie Flammenüberwachung in einem Verbrennungsraum bekannt. Um sowohl die Temperaturverteilung als auch die Konzentrationsverteilung von im Verbrennungsprozess entstehenden Reaktionsprodukten sowie Parameter der Flamme besonders schnell erfassen zu können, wird ein Bild einer Flamme aufgenommen und aus ortsaufgelösten Intensitäten des Bildes für mindestens einen vorgebbaren Spektralbereich eine räumliche Verteilung eines den Verbrennungsprozess charakterisierenden Parameters ermittelt. Ein optisches System der Vorrichtung weist eine Linse zur Erfassung der Flamme sowie drei nachgeschaltete Strahlteiler auf. Die von der Linse erfassten Bündelstrahlen werden durch die Strahlteiler auf insgesamt vier Spektralbereiche aufgeteilt und jeweils einem CCD-Bildsensor zugeführt.

Aus der europäischen Patentanmeldung EP 0 469 258 A1 ist eine Vorrichtung zur dreidimensionalen Abbildung der Temperatur einer Flamme, insbesondere zur Abbildung mehrerer Flammen eines Brenners in einem Boiler, wie z.B. in einem Kraftwerk, bekannt. Die Vorrichtung weist eine TV-Farbkamera zur Aufnahme eines Bildes der abzubildenden Flamme auf, wobei die TV-Farbkamera zur Ausgabe entsprechender Farbsignale ausgebildet ist. Die Vorrichtung weist zudem eine Steuereinheit mit Funktionseinheiten auf, die dazu geeignet sind, aus einem aufgenommenen Bild eine vektorielle Temperaturverteilung mittels einer Zweifarben-Pyrometrie zu erzeugen. Bei einer dortigen Ausführungsform wird empfohlen, zur das Rot- und Grünsignal der TV-Farbkamera zur Zweifarben-Pyrometrie zu verwenden. Ausdrücklich wird empfohlen, das Blausignal der TV-Farbkamera wegen der geringen Helligkeit und dessen Beeinträchtigung aufgrund chemischer Phänomene nicht zu verwenden.

Aus der europäischen Patentanmeldung EP 1 091 175 B1 ist ein Verfahren sowie eine dazu korrespondierende Vorrichtung zur Bestimmung des Luftüberschusses bei einem Verbrennungsprozess bekannt, indem die Bildungsraten der bei der Verbrennung gebildeten Reaktionsprodukte CN und CO ermittelt werden. Anschließend wird das Verhältnis der ermittelten Bildungsraten als eine den Luftüberschuss repräsentierende Größe gebildet. Zur Erfassung der Strahlungsintensitäten sind zumindest vier Spezialkameras vorgesehen.

Bei den derzeit bekannten Verfahren und Vorrichtungen tritt das Problem auf, dass die Kamerasysteme exakt, das heißt möglichst pixelgenau, zueinander ausgerichtet sein müssen, um Abbildungsfehler zwischen den spektral verschiedenen Auswertebereichen zu vermeiden. Hierbei sind zusätzlich noch thermische Ausdehnungseffekte sowie auf das optische System einwirkende mechanische Erschütterungen zu berücksichtigen. Entsprechend robust und stabil müssen die derzeitigen optischen Systeme ausgebildet sein. Die Systeme sind daher folglich sehr teuer.

Ein weiterer Nachteil ist der hohe Zeitbedarf für das mechanische Justieren eines derartigen optischen Systems. Zusätzlich sind solche Systeme vergleichsweise wartungsintensiv.

Ein weiterer großer Nachteil ist die notwendige zeitliche Synchronisation zwischen den Kameras, um eine eindeutige zeitliche Zuordnung der jeweiligen Helligkeitssignale der Kameras für die verschiedenen aufgespalteten Wellenlängenbereiche zu ermöglichen. Entsprechend hoch ist der messtechnische Aufwand.

Ausgehend von dem eingangs genannten Stand der Technik ist es eine Aufgabe der Erfindung, ein weniger aufwändigeres Verfahren zur kameragestützten Erfassung anzugeben.

Es ist eine weiteren Aufgabe der Erfindung, geeignete Anwendungen des erfindungsgemäßen Verfahrens anzugeben.

Schließlich ist es eine Aufgabe der Erfindung, eine zum Verfahren korrespondierende Vorrichtung anzugeben, welche weniger komplex und zugleich zuverlässiger ist.

Die Aufgabe der Erfindung wird für das Verfahren mit den Merkmalen des Patentanspruchs 1 gelöst. Vorteilhafte Verfahrensvarianten sind in den abhängigen Ansprüchen 2 bis 5 angegeben. In den Ansprüchen 6 und 7 sind geeignete vorteilhafte Anwendungen des erfindungsgemäßen Verfahrens genannt. Im Anspruch 8 ist eine zum erfindungsgemäßen Verfahren korrespondierende Vorrichtung angegeben. In den Ansprüchen 9 bis 11 sind vorteilhafte Ausführungsformen der Vorrichtung genannt.

Erfindungsgemäß ist eine RGB-Farbkamera zur Erfassung der Strahlungsintensität des Reaktionsproduktes in einem roten, grünen und blauen Wellenlängenbereich vorgesehen. Die RGB-Farbkamera weist einen Farbsensorchip mit einer Vielzahl von RGB-Farbpixeln auf. Es wird aus einem Blausignal der RGB-Farbkamera der Bandenstrahlungswert gebildet. Schließlich wird aus einem Rot- und Grünsignal der RGB-Farbkamera der zugehörige Temperaturstrahlungswert mittels einer Verhältnispyrometrie gebildet oder es wird entweder aus dem Rotsignal oder aus dem Grünsignal der RGB-Farbkamera der zugehörige Temperaturstrahlungswert mittels einer Pyrometrie gebildet. Mittels der gleichzeitigen pyrometrischen Messung kann die thermische Eigenstrahlung des jeweiligen Reaktionsproduktes erfasst und kompensiert werden.

Ersterer ist im Vergleich zur alleinigen Messung des Rotsignals oder des Grünsignals wegen der Verhältnisbildung aus dem Rotsignal und dem Grünsignal genauer.

Dabei beziehen sich die Farbbezeichnungen auf das optische Wahrnehmungsvermögen des Menschen. Bei den chemischen Reaktionsprodukten handelt es sich beispielsweise um gasförmige Radikale, wie z.B. um CO-, C₂-, CH-, CHOH-, CHO-, CN-, NH-, OH- oder O₂-Radikale, die typischerweise bei einem Hochtemperaturprozess von mehr als 1000 °C bei der Verbrennung von Kohlenwasserstoff entstehen. Bei den Reaktionsprodukten kann es sich alternativ oder zusätzlich um elementare Gase handeln, wie z.B. um O₂, N₂ oder um Edelgase, die beispielsweise bei einem Hochtemperaturprozess aus Materialien oder Stoffen ausdiffundieren oder dem Hochtemperaturprozess zugesetzt werden.

Der wesentliche Grundgedanke der vorliegenden Erfindung liegt in der Verwendung einer RGB-Farbkamera anstelle von mehreren Schwarz/Weiß-Kameras. Eine solche Kamera weist bereits "von Hause aus" die zur Bestimmung der Strahlungsintensität eines Reaktionsproduktes erforderlichen unterschiedlichen Wellenbereiche auf.

Dadurch reduziert sich zum einen die Anzahl der benötigen Kamerasysteme um jeweils zwei. Mit anderen Worten wird zur Erfassung der Emissionsrate eines chemischen Reaktionsproduktes nur eine einzige RGB-Farbkamera benötigt. Für die Vorrichtung gemäß der eingangs genannten Druckschriften werden somit anstelle von vier Schwarz/Weiß-Kameras nur zwei RGB-Farbkameras benötigt. Dadurch weist die Vorrichtung einen erheblich einfacheren Aufbau auf. Da die Kosten für eine RGB-Farbkamera aufgrund der hohen Verbreitung nur geringfügig höher sind als die einer Schwarz/Weiß-Kamera mit vergleichbarer Auflösung und Empfindlichkeit, reduzieren sich die Kosten für die erfindungsgemäße Vorrichtung drastisch. Zugleich reduzieren sich der Kühlaufwand und die Stromaufnahme für die nun geringere Anzahl von Kameras gleichfalls drastisch.

Darüber hinaus verringert sich vorteilhaft auch die Anzahl der erforderlichen Strahlteiler. So ist zur Erfassung der Strahlungsintensität eines einzigen chemischen Reaktionsproduktes überhaupt kein Strahlteiler erforderlich. Allgemein wird entsprechend der zu erfassenden Anzahl von Strahlungsintensitäten eine dazu um den Wert 1 verringerte Anzahl von Strahlteilern benötigt. Dagegen ist diese Anzahl bei Vorrichtung nach dem Stand der Technik um den Wert 1 erhöht.

Ein weiterer großer Vorteil liegt darin, dass die Vielzahl der RGB-Farbpixel auf einem Farbsensorchip einer RGB-Farbkamera bereits von vorneherein örtlich und zeitlich aufeinander abgestimmt und bereits quasi ideal justiert sind. Dadurch entfallen vorteilhaft der mechanische Justageaufwand zur optischen Ausrichtung der Kamerasysteme sowie der messtechnische Aufwand zur zeitlichen Synchronisierung der Helligkeitssignale für jeden Wellenlängenbereich.

Typischerweise setzt sich ein RGB-Farbpixel aus drei Unterpixel oder Sub-Pixel zusammen, wobei jeweils ein Unterpixel für die Farbe Rot, Grün und Blau vorhanden ist. Es können alternativ auch vier Unterpixel je RGB-Farbpixel vorhanden sein, insbesondere ein rotes, zwei grüne und ein blaues Unterpixel. Die drei Unterpixel liegen folglich auch am gleichen Auflösungsort innerhalb eines Farbpixels. Zugleich erfolgt das Auslesen der jeweiligen RGB-Unterpixel eines Farbsensors, wie z.B. bei einem CCD-Farbsensor (CCD für Charge Coupled Device) oder bei einem MOS-Farbsensor (MOS für Metal Oxide Semiconductor), gleichzeitig und somit synchronisiert, sei es zeilenweise oder auch bildweise.

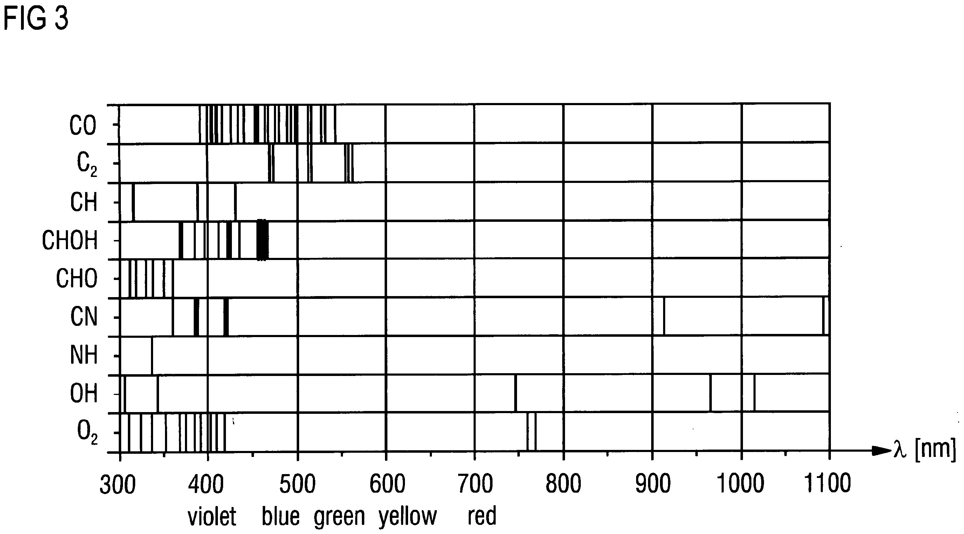

Nach einer Verfahrensvariante wird der jeweiligen RGB-Farbkamera ein optisches Sperrfilter mit einem vorgebbaren Durchlasswellenbereich für eine charakteristische Spektrallinie des jeweiligen Reaktionsproduktes vorgeschaltet, wobei das Sperrfilter nur wenige Prozent der eintreffenden Emission im Sperrbereich passieren lässt. Dadurch ist hinsichtlich der Emission eines chemischen Reaktionsproduktes eine besonders hohe Selektivität möglich. Typischerweise weist ein solches Sperrfilter einen Durchlasswellenbereich im Bereich von ca. 5 bis 20 nm auf. So liegt beispielsweise das spezifische Frequenzband einer der Spektrallinien für CO (Kohlenstoffmonoxid) im Bereich von 445 bis 455 nm und für das Reaktionsprodukt CN (für Cyanid) im Bereich von 430 bis 440 nm (siehe dazu auch FIG 3).

Ein derartiges Sperrfilter lässt vorzugsweise mehr als 90 % der eintreffenden Emission passieren. Es lässt weiterhin vorzugsweise nur wenige Prozent, insbesondere nur maximal 1 %, der eintreffenden Emission im Sperrbereich passieren. Den Sperrfiltern kann darüber hinaus ein IR-Filter, das heißt ein Infrarot-Filter, vorgeschaltet sein, um einen Großteil der eintreffenden Wärmestrahlung auszufiltern. Beide Filter können auch in einem einzigen Sperrfilter integriert sein.

Nach einer weiteren Verfahrensvariante wird eine Lichtquelle auf das hinsichtlich der Strahlungsintensität zu erfassende Reaktionsprodukt gerichtet, um das jeweilige Reaktionsprodukt zur Aussendung eines charakteristischen Emissionsspektrums optisch anzuregen. Die Lichtquelle sendet vorzugsweise einen gebündelten Lichtstrahl, insbesondere einen Laserstrahl, aus. Insbesondere sendet die Lichtquelle Licht einer Wellenlänge von weniger als 500 nm, wie z.B. 250 nm, aus. Das ausgesendete Licht liegt somit in einem Wellenlängenbereich, der sich von blau, über violett bis zu ultraviolett erstreckt.

Einer weiteren Verfahrensvariante zufolge wird das hinsichtlich der Strahlungsintensität zu erfassende jeweilige Reaktionsprodukt in einem Hochtemperaturprozesses gebildet und/oder ist bereits dort vorhanden. Dabei strahlt das jeweilige Reaktionsprodukt ein überwiegend im blauen bis violetten Wellenlängenbereich liegendes charakteristisches Emissionsspektrum aus. Gerade in diesem Wellenlängenbereich strahlen die chemischen Reaktionsprodukte, insbesondere die Radikale und die optisch angeregten Gase, als Chemolumineszensen ihr Emissionsspektrum in Form verteilter Spektrallinien aus. Mit "Chemolumineszenz" ist eine Emission von Licht gemeint, die nicht thermischen Ursprungs ist. Insbesondere werden zur Erfassung der Strahlungsintensität nur die Frequenzbänder von Spektrallinien eines zu erfassenden Reaktionsproduktes betrachtet und ausgefiltert, bei denen gegebenenfalls noch weitere vorhandene Reaktionsprodukte keine charakteristischen Spektrallinien aufweisen.

Nach einer weiteren Verfahrensvariante sind (genau) zwei RGB-Farbkameras zur Erfassung der Strahlungsintensitäten der bei einem Verbrennungsprozess entstehenden chemischen Reaktionsprodukte CN und CO in einem roten, grünen und blauen Wellenlängenbereich vorgesehen. Es wird gemäß der Erfindung aus dem jeweiligen Blausignal der beiden RGB-Farbkameras ein Bandenstrahlungswert des Reaktionsproduktes CN und ein Bandenstrahlungswert des Reaktionsproduktes CO gebildet. Es wird aus dem jeweiligen Rot- und Grünsignal der beiden RGB-Farbkameras ein jeweiliger Temperaturstrahlungswert mittels einer Verhältnispyrometrie gebildet. Es wird weiter aus der jeweiligen Differenz der Bandenstrahlungswerte und der zugehörigen Temperaturstrahlungswerte eine CN-Bildungsrate und eine CO-Bildungsrate gebildet. Schließlich wird aus dem Verhältnis K(CN)/ K(CO) der ermittelten Bildungsraten eine den Luftüberschuss bei dem Verbrennungsprozess repräsentierende Regelgröße gebildet.

Dadurch ist vorteilhaft eine geregelte, optimale Verbrennung von Brennstoffen auf Kohlenwasserstoffbasis, wie Kohle, Öl oder Erdgas, möglich, indem in Abhängigkeit der ermittelten Regelgröße die Luftzufuhr und/oder die Zuführung von Hilfsstoffen, wie Additiven, gesteuert wird.

Das erfindungsgemäße Verfahren ist vorteilhaft zur Ermittlung zumindest einer Bildungsrate eines jeweiligen chemischen Reaktionsproduktes bei einem Verbrennungsprozess in einem Kraftwerk, einer Müllverbrennungsanlage, einem Industrieofen oder in einer Hausfeuerungsanlage insbesondere zur Erzeugung thermischer Energie verwendbar. Bei den Reaktionsprodukten handelt es sich z.B. um CO-, C₂-, CH-, CHOH-, CHO-, CN- oder NH-Radikale, die in einem Verbrennungsraum durch eine Kohlenwasserstoffflamme entstehen.

Das erfindungsgemäße Verfahren ist in entsprechender Weise auch bei einem Verbrennungsmotor oder Triebwerk, insbesondere bei einem Verkehrsmittel wie Kraftfahrzeug, Schienenfahrzeug, Schiff oder Flugzeug, anwendbar. So kann z.B. der Verbrennungsprozess im Inneren des Zylinderraums eines Benzin- oder Dieselmotors mittels einer zum Verfahren korrespondierenden Vorrichtung beobachtet werden. Hierzu kann im jeweiligen Zylinder eine Durchgangsöffnung vorhanden sein, durch welche eine optische Erfassung des beim Betrieb des Verbrennungsmotors entstehenden Verbrennungsfeuers erfolgen kann. Es kann dann in Abhängigkeit der ermittelten Bildungsraten, insbesondere der CN- und CO-Bildungsraten, eine geregelte, optimale Verbrennung eingestellt werden. Vorzugsweise werden die Schritte des erfindungsgemäßen Verfahrens auf einer prozessorgestützten Verarbeitungseinheit der Motorsteuerung ausgeführt, über welche auch die Luft- und Kraftstoffzufuhr eingestellt werden. Es können eine oder mehrere zum Verfahren korrespondierende Vorrichtungen ähnlich wie eine Zündkerze am jeweiligen Zylinder angebracht, wie z.B. angeschraubt, sein. Es kann dann in einer vorzugsweise gekapselt ausgeführten Vorrichtung ein RGB-Farbsensor mit vorgeschaltetem Sperrfilter für das jeweilige Reaktionsprodukt druckdicht gegenüber dem Zylinderraum integriert sein. Die Verarbeitungseinheit ist vorzugsweise als Teil der Vorrichtung in der Motorsteuerung integriert. Anstelle eines Verbrennungsmotors kann mittels des Verfahrens auch der Verbrennungsprozess in einer Turbine, wie z.B. einer Kerosin- oder Gasturbine, überwacht und beobachtet werden. In diesem Fall ist die zuvor beschriebene Vorrichtung im Bereich des Turbinenverbrennungsraums angeordnet.

Weiterhin kann das erfindungsgemäßen Verfahren vorteilhaft zur Ermittlung zumindest einer Mengenrate eines jeweiligen Reaktionsproduktes bei einem Brennprozess in einem Hochofen für die Metallerzeugungsindustrie, in einem Diffusionsofen für die Halbleiterindustrie oder in einem Ofen zum Härten oder Sintern von Metallen angewendet werden. In diesem Fall können die im Brennraum entstehenden, insbesondere ausdiffundierenden Stoffe, wie z.B. beim Härten mittels Nitrieren, optisch erfasst werden. In Abhängigkeit von der ermittelten Mengenrate kann dann prozess- und regelungstechnisch mittels eines übergeordneten Prozessrechners eingegriffen werden. Vorzugsweise werden die bei derartigen Brennprozessen zu erfassenden Reaktionsprodukte noch mittels einer Lichtquelle, wie z.B. mittels eines UV-Lasers, optisch angeregt.

In entsprechender Weise können auch die bei einem Brennprozess zuzuführende Stoffe, wie z.B. Dotierungsstoffe in der Halbleiterindustrie wie Indium, Gallium, Arsenid, Phosphor und dergleichen, hinsichtlich ihrer Mengenrate erfasst werden, wobei mittels der gleichzeitigen pyrometrischen Messung die thermische Eigenstrahlung erfasst und kompensiert werden kann. Dadurch ist eine geregelte, optimale Einstellung einer im Brennraum vorliegenden Konzentration der jeweiligen Dotierungsstoffe vorteilhaft möglich.

Die Aufgabe der Erfindung wird weiterhin durch eine zum erfindungsgemäßen Verfahren korrespondierende Vorrichtung gelöst. Eine solche Vorrichtung weist eine signal- und/oder datentechnisch mit der Verarbeitungseinheit verbundene RGB-Farbkamera zur Erfassung der Strahlungsintensität des Reaktionsproduktes in einem roten, grünen und blauen Wellenlängenbereich auf. Die RGB-Farbkamera weist einen Farbsensorchip mit einer Vielzahl von RGB-Farbpixeln auf. Die Verarbeitungseinheit weist Mittel zur Bildung des Bandenstrahlungswertes aus einem Blausignal der RGB-Farbkamera auf. Die vorzugsweise prozessorgestützte Verarbeitungseinheit weist Mittel zur Bildung des zugehörigen Temperaturstrahlungswertes aus einem Rot- und Grünsignal der RGB-Farbkamera mittels einer Verhältnispyrometrie oder Mittel zur Bildung des zugehörigen Temperaturstrahlungswertes entweder aus dem Rotsignal oder aus dem Grünsignal mittels einer Pyrometrie auf.

Nach einer Ausführungsform ist der RGB-Farbkamera ein optisches Sperrfilter mit einem vorgebbaren Durchlasswellenbereich für eine charakteristische Spektrallinie des jeweiligen Reaktionsproduktes vorschaltbar, wobei das Sperrfilter zum Passieren von nur wenigen Prozent der eintreffenden Emission im Sperrbereich ausgebildet ist.

Insbesondere weist die Vorrichtung eine Anzahl von Strahlteilern auf, welche zumindest zwei RGB-Farbkameras vorgeschaltet sind, wobei die Anzahl der Strahlteiler dann um den Wert 1 gegenüber der Anzahl der RGB-Farbkameras verringert ist.

Die Erfindung sowie vorteilhafte Ausführungen der Erfindung werden im Weiteren anhand der nachfolgenden Figuren näher beschrieben. Es zeigen
- FIG 1: eine Vorrichtung nach dem Stand der Technik zur Bestimmung des Luftüberschusses bei einem Verbrennungsprozess,
- FIG 2: eine schematische Darstellung einer Vorrichtung nach dem Stand der Technik zur Verbrennungsanalyse in einem Verbrennungsraum,
- FIG 3: beispielhaft Strahlungsbanden einer Kohlenwasserstoffflamme,
- FIG 4: eine schematische Darstellung einer erfindungsgemäßen Vorrichtung mit beispielhaft einer einzigen RGB-Farbkamera,
- FIG 5: den Aufbau einer Verarbeitungseinheit der Vorrichtung gemäß FIG 4,
- FIG 6: eine erste Ausführungsform der erfindungsgemäßen Vorrichtung mit beispielhaft zwei RGB-Farbkameras,
- FIG 7: den Aufbau einer Verarbeitungseinheit der Vorrichtung gemäß FIG 6 und
- FIG 8: eine zweite Ausführungsform der erfindungsgemäßen Vorrichtung mit einer Lichtquelle.

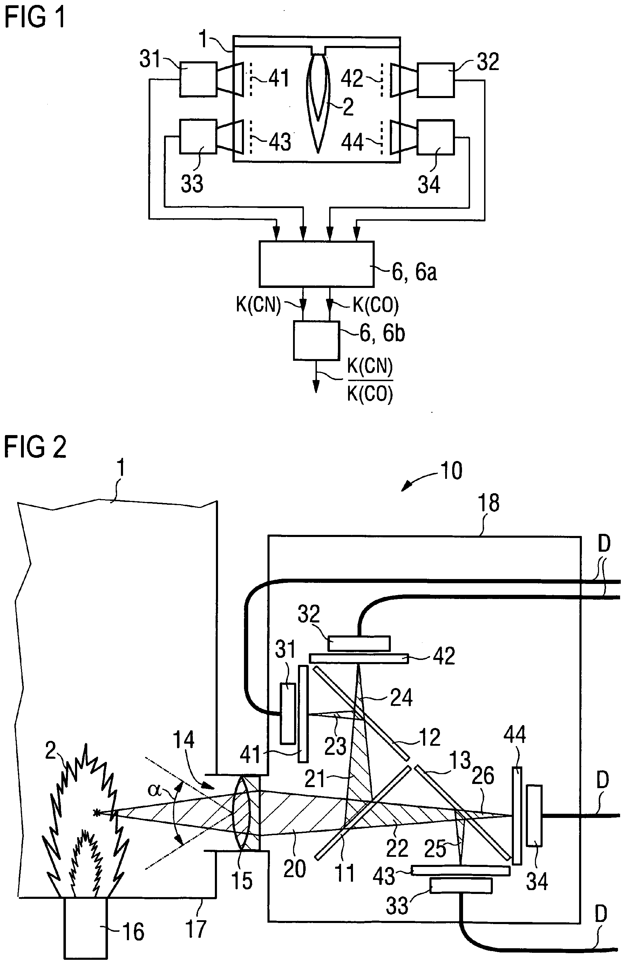

FIG 1 zeigt eine Vorrichtung nach dem Stand der Technik zur Bestimmung des Luftüberschusses bei einem Verbrennungsprozess. Bei der gezeigten Vorrichtung wird ein und derselbe Beobachtungspunkt bzw. Bildausschnitt der Verbrennungsflamme 2 in dem Verbrennungsraum 1 von vier CCD-Kameras 31-34 abgebildet. Den jeweiligen Kameras 31-34 sind schmalbandige Filter 41-44 zur Erfassung von vier unterschiedlichen Strahlungsintensitäten vorgeschaltet. Aus zwei der erfassten Strahlungsintensitäten, die vorzugsweise in bandenfreien Wellenlängenbereichen liegen, wird in einer nachgeschalteten Verarbeitungseinheit 6, 6a eine Temperaturstrahlung (Planck-Strahlung) nach der Verhältnispyrometrie ermittelt. Die beiden anderen Strahlungsintensitäten werden zur Bestimmung der bei der Bildung von CN und CO emittierten Bandenstrahlung (Chemolumineszenz) in den Wellenlängenbereichen um 420 nm bzw. um 450 nm herangezogen. Anschließend werden von den beiden anderen Strahlungsintensitäten die jeweilige Bandenstrahlung subtrahiert und damit die CN- und CO-Bildungsrate K(CN), K(CO) ermittelt. In der nachfolgenden Teileinrichtung 6b der Verarbeitungseinheit 6 wird aus dem Verhältnis K(CN)/K(CO) eine den Luftüberschuss repräsentierende Größe gebildet.

FIG 2 zeigt eine schematische Darstellung einer Vorrichtung nach dem Stand der Technik zur Verbrennungsanalyse in einem Verbrennungsraum 1. Im linken Teil der FIG 2 ist ein Verbrennungsraum 1 einer nicht weiter gezeigten Dampferzeugeranlage, z.B. eines fossilgefeuerten Dampferzeugers einer Kraftwerksanlage oder Müllverbrennungsanlage, mit einem Brenner 16 mit einer Flamme 2 dargestellt. Die dortige Vorrichtung umfasst ein optisches System 10, welches über eine Öffnung 14 in der Wandung 17 des Verbrennungsraums 1 für die Verbrennung charakteristische Strahlungsdaten D in Form von Bildern erfasst und an eine nicht weiter gezeigte Verarbeitungseinheit weiterleitet. Mit α ist ein Sichtwinkel auf die Verbrennungsflamme 2 bezeichnet. Er sollte zumindest so groß sein, dass die beim Verbrennungsprozess entstehende Flamme 2 möglichst komplett über die nachfolgende Linse 15 und weiter über die nachfolgenden Strahlteiler 11-14 auf die vier Kameras 31-34 bzw. auf deren lichtempfindlichen Sensorflächen abgebildet wird. Mit dem Bezugszeichen 20 ist das einfallende Lichtbündel bezeichnet, mit den Bezugszeichen 21-26 die mittels der Strahlteiler 11-14 aufgeteilten Lichtbündel. Zur Filterung der vier gewünschten Wellenlängenbereiche sind vier schmalbandige Filter 41-44 vorhanden. Das gesamte optische System 10 ist in einem gekühlten, gekapselten Gehäuse 18 untergebracht.

FIG 3 zeigt beispielhaft Strahlungsbanden einer Kohlenwasserstoffflamme. Es sind die jeweiligen Spektrallinien des Strahlungsbandes für CO-, C₂-, CH-, CHOH-, CHO-, CN-, NH-, OH- und O₂-Radikale als chemische Reaktionsprodukte über der Wellenlänge λ aufgetragen. Wie die FIG 3 zeigt, liegen die Spektrallinien der bei diesem Hochtemperaturprozess auftretenden Strahlungsbanden im blaugrünen, blau, violetten und ultravioletten Bereich. Dagegen befinden sich in dem für die Temperaturstrahlung maßgeblichen Wellenlängenbereich, das heißt im grünen, roten und infraroten Wellenlängenbereich, kaum Spektrallinien.

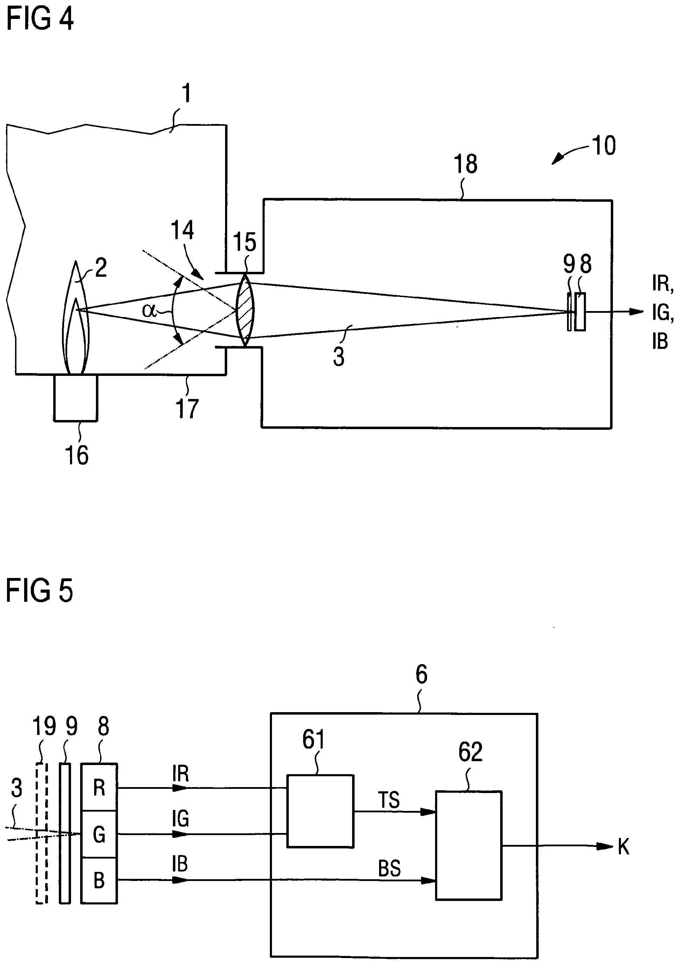

FIG 4 zeigt eine schematische Darstellung einer erfindungsgemäßen Vorrichtung mit beispielhaft einer einzigen RGB-Farbkamera 8. Sie ist zur Erfassung der Strahlungsintensität eines einzigen Reaktionsproduktes in einem roten, grünen und blauen Wellenlängenbereich vorgesehen. Mit IR, IG, IB sind die zugehörigen Farbsignale der RGB-Farbkamera 8 bezeichnet, welche den farbbezogenen Strahlungsintensitäten bzw. den Farbstrahlungsintensitäten in den zuvor genannten Wellenlängenbereichen entsprechen bzw. zugeordnet sind. Ein Strahlteiler ist durch die Verwendung der RGB-Farbkamera 8 in diesem Fall vorteilhaft nicht erforderlich.

FIG 5 zeigt den Aufbau einer Verarbeitungseinheit 6 der Vorrichtung gemäß FIG 4. Mit R, G, B sind die roten, grünen und blauen Farbsensoren der Farbkamera 8 bezeichnet. Sie liefern jeweils die zu einem Abbild der Flamme 2 zugehörigen Farbsignale IR, IG, IB. Der Farbkamera 8 ist weiterhin optisches Sperrfilter 9 vorgeschaltet, welches einen vorgebbaren Durchlasswellenbereich für eine charakteristische Spektrallinie des jeweiligen ausgewählten Reaktionsproduktes aufweist. Mit 19 ist ein optionales Infrarot-Filter bezeichnet, welches den zur Messung nicht erforderlichen Infrarotbereich ausblendet und somit eine unnötige Erwärmung der Farbkamera 8 verhindert.

Erfindungsgemäß weist die Verarbeitungseinheit 6 eine erste Teileinrichtung 61 als Mittel auf, welche aus dem Rot- und Grünsignal IR, IG der RGB-Farbkamera 8 einen Temperaturstrahlungswert TS mittels einer Verhältnispyrometrie bildet. Weiterhin weist die Verarbeitungseinheit 6 nicht weiter gezeigte Mittel auf, welche aus dem Blausignal IB der RGB-Farbkamera 8 einen dazu korrespondierenden Bandenstrahlungswertes BS des Reaktionsproduktes bilden. Im Beispiel der FIG 5 korrespondiert das Blausignal IB direkt mit dem Bandenstrahlungswert. Weiterhin weist die Verarbeitungseinheit 6 eine zweite Teileinrichtung 62 als Mittel auf, welche aus der Differenz des Bandenstrahlungswertes BS und des zugehörigen Temperaturstrahlungswertes TS eine Emissionsrate K für die Strahlungsintensität des jeweiligen Reaktionsproduktes bilden.

Alternativ - in der FIG 5 nicht dargestellt - kann der Temperaturstrahlungswert TS durch alleinige Messung des Rotsignals IR oder des Grünsignals IG mittels einer Pyrometrie erfolgen.

Die gemäß FIG 5 gezeigte Vorrichtung dient zur kameragestützten Erfassung der Strahlungsintensität insbesondere eines gasförmigen chemischen Reaktionsproduktes. Dieses kann typischerweise in einem Hochtemperaturprozesses gebildet werden bzw. dort bereits vorhanden sein. Im vorliegenden Beispiel ist der Hochtemperaturprozess ein Verbrennungsprozess, bei dem das Reaktionsprodukt ein überwiegend im blauen bis violetten Wellenlängenbereich liegendes charakteristisches Emissionsspektrum ausstrahlt.

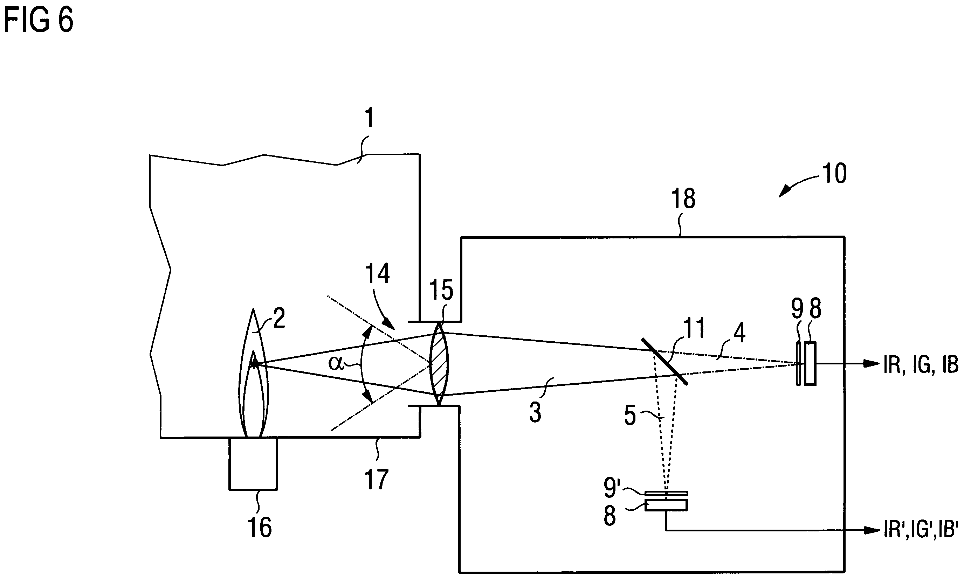

FIG 6 zeigt eine erste Ausführungsform der erfindungsgemäßen Vorrichtung mit beispielhaft zwei RGB-Farbkameras 8. Sie sind insbesondere zur Erfassung der Strahlungsintensitäten der bei einem Verbrennungsprozess entstehenden chemischen Reaktionsprodukte CN und CO in einem roten, grünen und blauen Wellenlängenbereich vorgesehen. Die Vorrichtung weist dabei einen Strahlteiler 11 auf, welcher das eintreffende Lichtbündel 3 in ein erstes und zweites Lichtbündel 4, 5 aufteilt. Die beiden RGB-Farbkameras 8 sind so ausgerichtet, dass das Abbild der Verbrennungsflamme 2 in etwa auf die gleiche Stelle des Farbsensors R, G, B der beiden RGB-Farbkameras 8 auftrifft. Eine exakte Justierung wie beim Stand der Technik ist hier nicht erforderlich, da die hochgenaue "Justage" bei der RGB-Farbkamera 8 per se vorhanden ist. Mit 9, 9' sind Sperrfilter bezeichnet, die auf die beiden Reaktionsprodukte CN und CO abgestimmt sind und einen Durchlasswellenbereich um 420 nm bzw. 450 nm aufweisen.

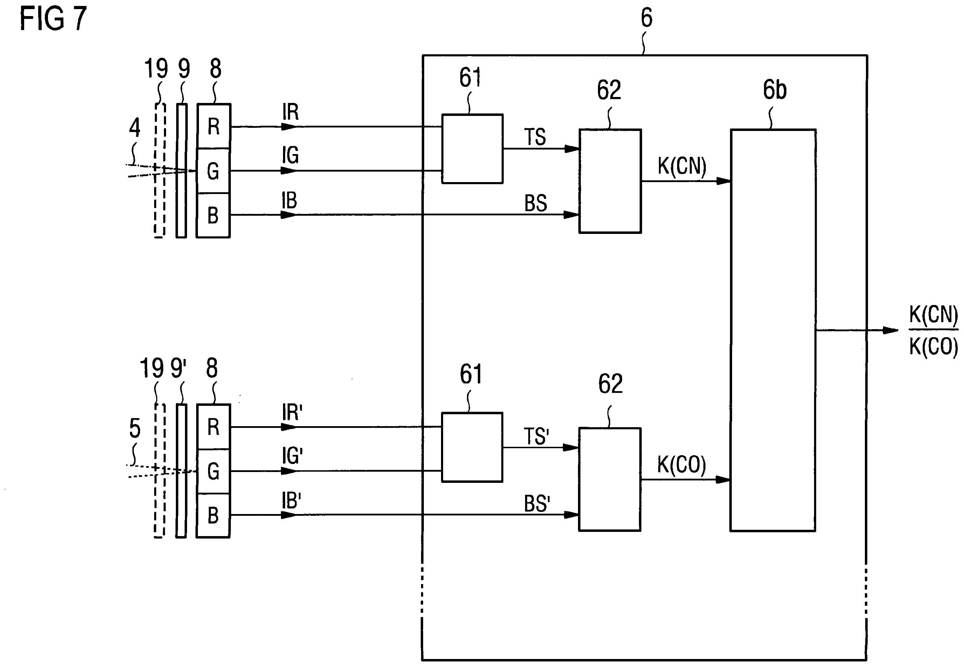

FIG 7 zeigt den Aufbau einer Verarbeitungseinheit 6 der Vorrichtung gemäß FIG 6. Die Verarbeitungseinheit 6 weist dabei Mittel zur Ermittlung jeweils eines Bandenstrahlungswertes BS, BS' der Reaktionsprodukte CN und CO aus den jeweiligen Blausignalen IB, IB' der beiden RGB-Farbkameras 8 auf. Sie umfasst zudem Mittel 61 zur Bildung eines jeweiligen Temperaturstrahlungswertes TS, TS' aus dem jeweiligen Rot- und Grünsignal IR, IG, IR', IG' der beiden RGB-Farbkameras 8 mittels einer Verhältnispyrometrie. Weiterhin weist die gezeigte Verarbeitungseinheit 6 Mittel 62 zur Bildung einer CN-Bildungsrate K(CN) sowie einer CO-Bildungsrate K(CO) aus der jeweiligen Differenz der Bandenstrahlungswerte BS, BS' und der zugehörigen Temperaturstrahlungswerte TS, TS' auf. Schließlich weist sie Mittel 6b zur Bildung einer den Luftüberschuss bei dem Verbrennungsprozess repräsentierenden Regelgröße aus dem Verhältnis K(CN)/K(CO) der ermittelten Bildungsraten K(CN), K(CO) auf. Diese Regelgröße kann einem Regelungsprozess einer übergeordneten Regelung des Verbrennungsprozesses zugeführt werden.

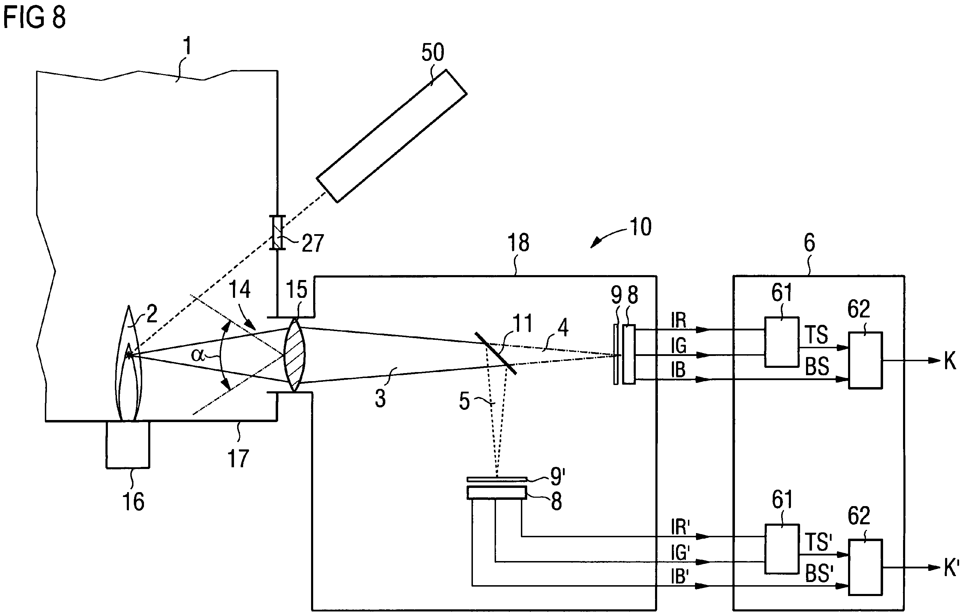

FIG 8 zeigt eine zweite Ausführungsform der erfindungsgemäßen Vorrichtung mit einer Lichtquelle 50. Sie wird auf das hinsichtlich der Strahlungsintensität zu erfassende Reaktionsprodukt gerichtet, um das jeweilige Reaktionsprodukt zur Aussendung eines charakteristischen Emissionsspektrums optisch anzuregen. Im Beispiel der FIG 8 ist die Lichtquelle 50 ein Laser. Zur Einleitung des Laserstrahls ist in der Wandung 17 des Verbrennungsraums 1 ein keines Fenster, wie z.B. aus Quarzglas, vorgesehen. Die Lichteinleitung und optische Erfassung des jeweiligen Reaktionsproduktes kann alternativ durch ein einziges Fenster erfolgen.

In der vorliegenden FIG 8 ist weiterhin eine Verbrennungsflamme 2 dargestellt. Diese ist zur optischen Anregung der zu erfassenden Reaktionsprodukte nicht zwingend erforderlich. Mit anderen Worten kann es sich bei dem gezeigten Verbrennungsraum 1 auch um einen für das menschliche Auge sonst "dunklen" oder rotleuchtenden Brennraum handeln, in welchem die Reaktionsprodukte dann mittels der Lichtquelle 50 optisch angeregt werden und welche dann typischerweise im blauen bis violetten Wellenlängenbereich leuchten.

Weiterhin stellt die Verarbeitungseinheit 6 der Vorrichtung gemäß FIG 8 eine erste und zweite Emissionsrate K, K' zur möglichen Weiterverarbeitung durch einen nachfolgenden übergeordnete Regelungsprozess zur Verfügung. Bei der jeweiligen Emissionsrate K, K' kann es sich um jeweils eine Bildungsrate von zugehörigen aktiv emittierenden Reaktionsprodukten in einem Verbrennungsprozess oder um jeweils eine Mengenrate von zugehörigen Reaktionsprodukten in einem Brennprozess mit optisch erzwungener Emission handeln.

### Bezugszeichenliste

- 1: Verbrennungsraum, Feuerraum, Brennraum
- 2: Verbrennungsflamme
- 3-5, 20-26: Strahlenbündel, Lichtbündel
- 6, 6a, 6b,: Verarbeitungseinheit, Teileinrichtungen
- 8: RGB-Farbkamera
- 9, 9': Filter, Sperrfilter
- 10: optisches System
- 11-13: Strahlteiler
- 14: Öffnung
- 15: Linse
- 16: Brenner
- 17: Wandung
- 18: Gehäuse
- 19: IR-Filter, Infrarot-Filter
- 27: Fenster
- 31-34: Kameras, CCD-Kameras
- 41-44: Filter
- 50: Lichtquelle, Laser
- 61, 62: Teileinrichtungen, Mittel

- α: Sichtwinkel
- λ: Wellenlänge
- D: Strahlungsdaten
- IR, IG, IB IR',IG',IB': Farbsignale, Farbstrahlungsintensitäten
- TS, TS': Temperaturstrahlungswerte
- K(CO): CO-Bildungsrate
- K(CN): CN-Bildungsrate
- K, K': Emissionsrate
- R, G, B: Farbsensoren

## Patentansprüche

1. Verfahren zur kameragestützten Erfassung der Strahlungsintensität eines gasförmigen chemischen Reaktionsproduktes, wobei aus der Differenz eines Bandenstrahlungswertes (BS) des Reaktionsproduktes und eines auf pyrometrischem Wege gebildeten Temperaturstrahlungswertes (TS) des Reaktionsproduktes eine Emissionsrate (K) für die Strahlungsintensität des Reaktionsproduktes gebildet wird,
**dadurch gekennzeichnet,**
- **dass** eine RGB-Farbkamera (8) zur Erfassung der Strahlungsintensität des Reaktionsproduktes in einem roten, grünen und blauen Wellenlängenbereich vorgesehen ist, wobei die RGB-Farbkamera (8) einen Farbsensorchip mit einer Vielzahl von RGB-Farbpixeln aufweist,
- **dass** aus einem Blausignal (IB) der RGB-Farbkamera (8) der Bandenstrahlungswert (BS) gebildet wird und
- **dass** aus einem Rot- und Grünsignal (IR, IG) der RGB-Farbkamera (8) der zugehörige Temperaturstrahlungswert (TS) mittels einer Verhältnispyrometrie gebildet wird oder dass entweder aus dem Rotsignal (IR) oder aus dem Grünsignal (IG) der RGB-Farbkamera (8) der zugehörige Temperaturstrahlungswert (TS) mittels einer Pyrometrie gebildet wird.

2. Verfahren nach Anspruch 1,
**dadurch gekennzeichnet, dass** der RGB-Farbkamera (8) ein optisches Sperrfilter (9) mit einem vorgebbaren Durchlasswellenbereich für eine charakteristische Spektrallinie des jeweiligen Reaktionsproduktes vorgeschaltet ist, wobei das Sperrfilter (9) nur wenige Prozent der eintreffenden Emission im Sperrbereich passieren lässt.

3. Verfahren nach Anspruch 1 oder 2,
**dadurch gekennzeichnet, dass** eine Lichtquelle (50) auf das hinsichtlich der Strahlungsintensität zu erfassende Reaktionsprodukt gerichtet wird, um das jeweilige Reaktionsprodukt zur Aussendung eines charakteristischen Emissionsspektrums optisch anzuregen.

4. Verfahren nach Anspruch 1 oder 2,
**dadurch gekennzeichnet, dass** das hinsichtlich der Strahlungsintensität zu erfassende jeweilige Reaktionsprodukt in einem Hochtemperaturprozesses gebildet wird und/oder bereits vorhanden ist und dass das jeweilige Reaktionsprodukt ein überwiegend im blauen bis violetten Wellenlängenbereich liegendes charakteristisches Emissionsspektrum ausstrahlt.

5. Verfahren nach Anspruch 4, **dadurch gekennzeichnet,**
- **dass** zwei RGB-Farbkameras (8) zur Erfassung der Strahlungsintensitäten der bei einem Verbrennungsprozess entstehenden chemischen Reaktionsprodukte CN und CO in einem roten, grünen und blauen Wellenlängenbereich vorgesehen sind,
- **dass** aus dem jeweiligen Blausignal (IB, IB') der beiden RGB-Farbkameras (8) ein Bandenstrahlungswert (BS) des Reaktionsproduktes CN und ein Bandenstrahlungswert (BS') des Reaktionsproduktes CO gebildet wird,
- **dass** aus dem jeweiligen Rot- und Grünsignal (IR, IG, IR', IG') der beiden RGB-Farbkameras (8) ein jeweiliger Temperaturstrahlungswert (TS, TS') mittels einer Verhältnispyrometrie gebildet wird,
- **dass** aus der jeweiligen Differenz der Bandenstrahlungswerte (BS, BS') und der zugehörigen Temperaturstrahlungswerte (TS, TS') eine CN-Bildungsrate K(CN) und eine CO-Bildungsrate K(CO) gebildet wird und
- **dass** aus dem Verhältnis K(CN)/K(CO) der ermittelten Bildungsraten K(CN), K(CO) eine den Luftüberschuss bei dem Verbrennungsprozess repräsentierende Regelgröße gebildet wird.

6. Anwendung des Verfahrens nach einem der vorangegangenen Ansprüche zur Ermittlung zumindest einer Bildungsrate (K) eines jeweiligen chemischen Reaktionsproduktes bei einem Verbrennungsprozess in einem Kraftwerk, einer Müllverbrennungsanlage, einem Industrieofen, einer Hausfeuerungsanlage oder in einem Verbrennungsmotor oder Triebwerk, insbesondere eines Verkehrsmittels wie Kraftfahrzeug, Schienenfahrzeug, Schiff oder Flugzeug.

7. Anwendung des Verfahrens nach einem der Ansprüche 1 bis 4 zur Ermittlung zumindest einer Mengenrate eines jeweiligen Reaktionsproduktes bei einem Brennprozess in einem Hochofen für die Metallerzeugungsindustrie, in einem Diffusionsofen für die Halbleiterindustrie oder in einem Ofen zum Härten oder Sintern von Metallen.

8. Vorrichtung zur kameragestützten Erfassung der Strahlungsintensität eines gasförmigen chemischen Reaktionsproduktes, wobei die Vorrichtung eine Verarbeitungseinheit (6) mit Mitteln zur Bildung einer Emissionsrate (K) für die Strahlungsintensität des Reaktionsproduktes aus der Differenz eines Bandenstrahlungswertes (BS) des Reaktionsproduktes und eines auf pyrometrischem Wege gebildeten Temperaturstrahlungswertes (TS) des Reaktionsproduktes aufweist,
**dadurch gekennzeichnet,**
- **dass** die Vorrichtung eine signal- und/oder datentechnisch mit der Verarbeitungseinheit (6) verbundene RGB-Farbkamera (8) zur Erfassung der Strahlungsintensität des Reaktionsproduktes in einem roten, grünen und blauen Wellenlängenbereich aufweist, wobei die RGB-Farbkamera (8) einen Farbsensorchip mit einer Vielzahl von RGB-Farbpixeln aufweist,
- **dass** die Verarbeitungseinheit (6) Mittel zur Bildung des Bandenstrahlungswertes (BS) aus einem Blausignal (IB) der RGB-Farbkamera (8) aufweist und
- **dass** die Verarbeitungseinheit (6) Mittel zur Bildung des zugehörigen Temperaturstrahlungswertes (TS) aus einem Rot- und Grünsignal (IR, IG) der RGB-Farbkamera (8) mittels einer Verhältnispyrometrie oder Mittel zur Bildung des zugehörigen Temperaturstrahlungswertes (TS) entweder aus dem Rotsignal (IR) oder aus dem Grünsignal (IG) mittels einer Pyrometrie aufweist.

9. Vorrichtung nach Anspruch 8,
**dadurch gekennzeichnet, dass** der RGB-Farbkamera (8) ein optisches Sperrfilter (9) mit einem vorgebbaren Durchlasswellenbereich für eine charakteristische Spektrallinie des jeweiligen Reaktionsproduktes vorschaltbar ist, wobei das Sperrfilter (9) zum Passieren von nur wenigen Prozent der eintreffenden Emission im Sperrbereich ausgebildet ist.

10. Vorrichtung nach einem der Ansprüche 8 oder 9,
**dadurch gekennzeichnet,**
- **dass** die Vorrichtung zwei RGB-Farbkameras (8) zur Erfassung der Strahlungsintensitäten der bei einem Verbrennungsprozess entstehenden chemischen Reaktionsprodukte CN und CO in einem roten, grünen und blauen Wellenlängenbereich aufweist und
- **dass** die Verarbeitungseinheit (6) Mittel zur Ermittlung jeweils eines Bandenstrahlungswertes (BS, BS') der Reaktionsprodukte CN und CO aus den jeweiligen Blausignalen (IB, IB') der beiden RGB-Farbkameras (8), Mittel zur Bildung eines jeweiligen Temperaturstrahlungswertes (TS, TS') aus dem jeweiligen Rot- und Grünsignal (IR, IG, IR', IG') der beiden RGB-Farbkameras (8) mittels einer Verhältnispyrometrie, Mittel zur Bildung einer CN-Bildungsrate K(CN) und einer CO-Bildungsrate K(CO) aus der jeweiligen Differenz der Bandenstrahlungswerte (BS, BS') und der zugehörigen Temperaturstrahlungswerte (TS, TS') und Mittel zur Bildung einer den Luftüberschuss bei dem Verbrennungsprozess repräsentierenden Regelgröße aus dem Verhältnis K(CN)/K(CO) der ermittelten Bildungsraten K(CN), K(CO) aufweist.

11. Vorrichtung nach einem der Ansprüche 8 bis 10,
**dadurch gekennzeichnet, dass** die Vorrichtung eine Anzahl von Strahlteilern (11) aufweist, welche zumindest zwei RGB-Farbkameras (8) vorgeschaltet sind, wobei die Anzahl der Strahlteiler (11) um den Wert 1 gegenüber der Anzahl der RGB-Farbkameras (8) verringert ist.

## Claims

1. A method for a camera-assisted detection of radiation intensity, of a gaseous chemical reaction product, wherein an emission rate (K) for the radiation intensity of the reaction product is made from the difference of a band radiation value (BS) of the reaction product and a temperature radiation value (TS) of the reaction product, generated by pyrometric means, **characterized in that**
- a RGB-color camera (8) is provided for the detection of the radiation intensity of the reaction product in a red, a green and a blue wave length range, wherein the RGB-color camera (8) comprises a color sensor chip having numerous RGB color pixel,
- from a blue signal (IB) of the RGB-color camera (8) the band radiation value (BS) is generated, and
- from a red- and green signal (IR, IG) of the RGB-color camera (8), the corresponding temperature radiation value (TS) is generated by means of a comparative pyrometry, or the corresponding temperature radiation value (TS) is either generated from the red signal (IR) or from the green signal (IG) by means of a pyrometry.

2. The method according to claim 1, **characterized in that** an optical rejection filter (9) having a transmission wave length range that can be predetermined for a characteristic spectral line of the respective reaction product, is placed anterior to the RGB-color camera (8), wherein the rejection filter (9) permits the transmission of only a few percent of the incoming emission in an exclusion range.

3. The method according to claim 1 or 2, **characterized in that** a light source (50) is directed at the reaction product to be detected with respect to the radiation intensity, in order to optically excite the respective reaction product for emitting a characteristic emission spectrum.

4. The method according to claim 1 or 2, **characterized in that** the respective reaction product to be detected with respect to the radiation intensity is formed in a high temperature process and/or is already present and that the respective reaction product emits a characteristic emission spectrum which is predominantly in the blue to violet wave length range.

5. The method according to claim 4, **characterized in that**
- two RGB-color cameras (8) are provided for the detection of radiation intensities of chemical reaction products CN and CO, formed in a combustion process, in a red, green and blue wave length range,
- from the respective blue signal (IB, IB') of the two RGB-color cameras (8), a band radiation value (BS) for the reaction product CN and a band radiation value (BS') for the reaction product CO is generated,
- from each of the respective red- and green signal (IR, IG, IR', IG') of the two RGB-color cameras (8), a corresponding temperature radiation value (TS, TS') is generated by means of a comparative pyrometry,
- from the respective difference of the band radiation values (BS, BS') and the corresponding temperature radiation values (TS, TS'), a CN formation rate K(CN) and a CO formation rate K(CO) is generated and,
- from the ratio K(CN)/K(CO) of the determined formation rates K(CN), K(CO) a regulating variable is generated, which represents the excess air in the combustion process.

6. Use of the method according to one of the preceding claims for the detection of at least one formation rate (K) of a respective chemical reaction product in connection with a combustion process taking place in a power station, in a garbage incineration installation, an industrial furnace, a domestic furnace and in a combustion engine or power unit, in particular of a means of transport, like motor vehicle, rail vehicle, boat or airplane.

7. Use of the method according to claim 1 to 4 for the detection of at least a volume rate of a respective reaction product in a combustion process in a blast furnace for the metal production industry, in a diffusion furnace for the semiconductor industry or in a furnace for hardening and sintering of metals.

8. A device for the camera-assisted detection of radiation intensity of a gaseous chemical reaction product, wherein the device comprises a processing unit (6) having means for the formation of an emission rate (K) for the radiation intensity of the reaction product derived from the difference of a band radiation value (BS) of the reaction product and a temperature radiation value (TS) of the reaction product, formed by pyrometric means, **characterized in that**
- the device comprises a processing unit (6) which is connected in a signal technical way and/or in a data technical way to a RGB-color camera (8) for the detection of the radiation intensity of the reaction product in a red, green and blue wavelength range, wherein the RGB-color camera (8) comprises a color sensor chip having numerous RGB color pixel,
- that the processing unit (6) comprises means for the formation of the band radiation value (BS) from a blue signal (IB) of the RGB-color camera (8),and
- that the processing unit (6) comprises means for the formation of the corresponding temperature radiation value (TS) from a red- and green signal (IR, IG) of the RGB-color camera (8) through comparative pyrometry or means for the formation of the corresponding temperature radiation value (TS) either from the red signal (IR) or from the green signal (IG) by means of a pyrometry.

9. The device according to claim 8, **characterized in that** an optical rejection filter (9) with a transmission wave length range that can be predetermined, for a characteristic spectral line of the respective reaction product, which can be placed anterior to the RGB-color camera (8), wherein the rejection filter (9) is configured for the passage of only a few percent of the incoming emission in the exclusion range.

10. The device according to claim 8 or 9, **characterized in that**
- the device comprises two RGB-color cameras (8) for the detection of the radiation intensities of the chemical reaction products CN and CO resulting from a combustion process in a red, green and blue wavelength range, and
- the processing unit (6) comprises means for the detection of a respective band radiation value (BS, BS") of the reaction products CN and CO from the respective blue signals (IB, IB") of the two RGB-color cameras (8); means for the formation of a respective temperature radiation value (TS, TS") from the respective red- and green signal (IR, IG, IR', IG') of the two RGB-color cameras (8) by means of a comparative pyrometry; means for the formation of a CN-formation rate K(CN) and a CO-formation rate K(CO) from the respective difference of the band radiation values (BS, BS') and the corresponding temperature radiation values (TS, TS') and means for the formation of a regulating variable that represents the excess air in a combustion process from the ratio K(CN)/K(CO) of the detected formation rates K(CN), K(CO).

11. The device according to one of claims 8 to 10, **characterized in that** the device comprises a number of beam splitters (11) that are placed anterior to the at least two RGB-color cameras (8), wherein the number of beam splitters (11) is reduced by the value of 1 as compared to the number of RGB-color cameras (8).

## Revendications

1. Procédé d'acquisition assistée par caméra de l'intensité de rayonnement d'un produit de réaction chimique gazeux, un taux d'émission (K) pour l'intensité de rayonnement du produit de réaction étant formé à partir de la différence entre une valeur de rayonnement de bandes (BS) du produit de réaction et une valeur de rayonnement thermique (TS) du produit de réaction, formée de manière pyrotechnique,
**caractérisé en ce,**
- **qu'**une caméra couleur RGB (8) est présente, destinée à acquérir l'intensité de rayonnement du produit de réaction dans une plage de longueurs d'onde du rouge, du vert et du bleu, la caméra couleur RGB (8) possédant une puce capteur de couleur pourvue d'une pluralité de pixels de couleur RGB,
- **que** la valeur de rayonnement de bandes (BS) est formée à partir d'un signal bleu (IB) de la caméra couleur RGB (8), et
- **que** la valeur de rayonnement thermique (TS) associée est formée à partir d'un signal rouge et vert (IR, IG) de la caméra couleur RGB (8) au moyen d'une pyrométrie à quotient ou que la valeur de rayonnement thermique (TS) associée est formée soit à partir du signal rouge (IR), soit à partir du signal vert (IG) de la caméra couleur RGB (8) au moyen d'une pyrométrie.

2. Procédé selon la revendication 1, **caractérisé en ce qu'**un filtre d'arrêt optique (9) ayant une plage de longueurs d'onde passante pour une courbe spectrale caractéristique du produit de réaction respectif est monté en amont de la caméra couleur RGB (8), le filtre d'arrêt (9) ne laissant passer qu'un faible pourcentage de l'émission incidente dans la bande de blocage.

3. Procédé selon la revendication 1 ou 2, **caractérisé en ce qu'**une source de lumière (50) est dirigée sur le produit de réaction à détecter pour ce qui concerne l'intensité de rayonnement en vue d'exciter optiquement le produit de réaction respectif pour qu'il émette un spectre d'émission caractéristique.

4. Procédé selon la revendication 1 ou 2, **caractérisé en ce que** le produit de réaction respectif à détecter pour ce qui concerne l'intensité de rayonnement est formé dans un processus à haute température et/ou est déjà présent et **en ce que** le produit de réaction respectif émet un spectre d'émission caractéristique qui se trouve majoritairement dans la plage de longueurs d'onde du bleu au violet.

5. Procédé selon la revendication 4, **caractérisé en ce**
- **que** deux caméras couleur RGB (8) sont présentes, destinées à acquérir les intensités de rayonnement des produits de réaction chimiques CN et CO produits lors d'un processus de combustion dans une plage de longueurs d'onde du rouge, du vert et du bleu,
- **qu'**une valeur de rayonnement de bandes (BS) du produit de réaction CN et une valeur de rayonnement de bandes (BS') du produit de réaction CO sont formées à partir du signal bleu (IB, IB') respectif des deux caméras couleur RGB (8),
- **qu'**une valeur de rayonnement thermique (TS, TS') respective est formée à partir du signal rouge et vert (IR, IG, IR', IG') respectif des deux caméras couleur RGB (8) au moyen d'une pyrométrie à quotient,
- **qu'**un taux de formation de CN K(CN) et un taux de formation de CO K(CO) sont formés à partir de la différence respective des valeurs de rayonnement de bandes (BS, BS') et des valeurs de rayonnement thermique (TS, TS') associées et
- **qu'**une grandeur de régulation représentant l'excédent d'air lors du processus de combustion est formée à partir du rapport K(CN)/K(CO) des taux de formation K(CN), K(CO) déterminés.

6. Utilisation du procédé selon l'une des revendications précédentes pour déterminer au moins un taux de formation (K) d'un produit de réaction chimique respectif lors d'un processus de combustion dans une centrale électrique, un centre d'incinération des ordures, un four industriel, un équipement de chauffage domestique ou dans un moteur à combustion interne ou un groupe motopropulseur, notamment d'un moyen de transport comme un véhicule automobile, un véhicule ferroviaire, un navire ou un aéronef.

7. Utilisation du procédé selon l'une des revendications 1 à 4 pour déterminer au moins un taux quantitatif d'un produit de réaction respectif lors d'un processus de combustion dans un haut fourneau pour l'industrie métallurgique, dans un four de diffusion pour l'industrie des semiconducteurs ou dans un four destiné à la trempe ou au frittage de métaux.

8. Dispositif d'acquisition assistée par caméra de l'intensité de rayonnement d'un produit de réaction chimique gazeux, le dispositif possédant une unité de traitement (6) comprenant des moyens pour former un taux d'émission (K) pour l'intensité de rayonnement du produit de réaction à partir de la différence entre une valeur de rayonnement de bandes (BS) du produit de réaction et une valeur de rayonnement thermique (TS) du produit de réaction, formée de manière pyrotechnique, **caractérisé en ce,**
- **que** le dispositif possède une caméra couleur RGB (8) reliée en communication de signaux et/ou de données avec l'unité de traitement (6) destinée à acquérir l'intensité de rayonnement du produit de réaction dans une plage de longueurs d'onde du rouge, du vert et du bleu, la caméra couleur RGB (8) possédant une puce capteur de couleur pourvue d'une pluralité de pixels de couleur RGB,
- **que** l'unité de traitement (6) possède des moyens pour former la valeur de rayonnement de bandes (BS) à partir d'un signal bleu (IB) de la caméra couleur RGB (8), et
- **que** l'unité de traitement (6) possède des moyens pour former la valeur de rayonnement thermique (TS) associée à partir d'un signal rouge et vert (IR, IG) de la caméra couleur RGB (8) au moyen d'une pyrométrie à quotient ou des moyens pour former la valeur de rayonnement thermique (TS) associée soit à partir du signal rouge (IR), soit à partir du signal vert (IG) au moyen d'une pyrométrie.

9. Dispositif selon la revendication 8, **caractérisé en ce qu'**un filtre d'arrêt optique (9) ayant une plage de longueurs d'onde passante pour une courbe spectrale caractéristique du produit de réaction respectif peut être monté en amont de la caméra couleur RGB (8), le filtre d'arrêt étant réalisé pour (9) ne laisser passer qu'un faible pourcentage de l'émission incidente dans la bande de blocage.

10. Dispositif selon l'une des revendications 8 ou 9, **caractérisé en ce**
- **que** le dispositif possède deux caméras couleur RGB (8), destinées à acquérir les intensités de rayonnement des produits de réaction chimiques CN et CO produits lors d'un processus de combustion dans une plage de longueurs d'onde du rouge, du vert et du bleu, et
- **que** l'unité de traitement (6) possède des moyens pour déterminer respectivement une valeur de rayonnement de bandes (BS, BS') des produits de réaction CN et CO à partir des signaux bleus (IB, IB') respectifs des deux caméras couleur RGB (8), des moyens pour former une valeur de rayonnement thermique (TS, TS') respective à partir du signal rouge et vert (IR, IG, IR', IG') respectif des deux caméras couleur RGB (8) au moyen d'une pyrométrie à quotient, des moyens pour former un taux de formation de CN K(CN) et un taux de formation de CO K(CO) à partir de la différence respective des valeurs de rayonnement de bandes (BS, BS') et des valeurs de rayonnement thermique (TS, TS') associées et des moyens pour former une grandeur de régulation représentant l'excédent d'air lors du processus de combustion à partir du rapport K(CN)/K(CO) des taux de formation K(CN), K(CO) déterminés.

11. Dispositif selon l'une des revendications 8 ou 10, **caractérisé en ce que** le dispositif possède une pluralité de diviseurs de faisceau (11) qui sont montés en amont d'au moins deux caméras couleur RGB (8), le nombre de diviseurs de faisceau (11) étant réduit de la valeur 1 par rapport au nombre de caméras couleur RGB (8) .
